# EUROPEAN PATENT APPLICATION

(11) **EP 4 485 919 A1**
(43) Date of publication of application: **01.01.2025**
(21) Application number: 24185014.8
(22) Date of filing: 27.06.2024
(51) Int. Cl.: H04N 7/18, G06T 19/00, G06V 20/52

(54) **SMART SURVEILLANCE AND CONTROL TECHNOLOGY USING DIGITAL TWINS**

(30) Priority: 29.06.2023 KR 20230084335
(71) Applicant: Hanwha Vision Co., Ltd., Seongnam-si, Gyeonggi-do 13488 (KR)
(72) Inventor: Kim, Seonghee, 13488 Seongnam-si, Gyeonggi-do (KR); Lim, Jeongeun, 13488 Seongnam-si, Gyeonggi-do (KR); Jang, Gwangwhoon, 13488 Seongnam-si, Gyeonggi-do (KR); Chun, Sungpil, 13488 Seongnam-si, Gyeonggi-do (KR); Kim, Hansang, 13488 Seongnam-si, Gyeonggi-do (KR)
(74) Representative: Gulde & Partner

(57) **Abstract**

Provided is a method. The method includes an input data reception operation of receiving input data including image data obtained from a plurality of cameras, a coordinate detection operation of detecting object coordinates indicating a location of an object present in a surveillance and control target area from the input data, a mapping coordinate calculation operation of calculating object mapping coordinates in a virtual three-dimensional (3D) space that correspond to the object coordinates in the target area, and a spatial data generation operation of placing a virtual object corresponding to the object in the virtual 3D space corresponding to the target area on the basis of the calculated object mapping coordinates and generating display data for displaying the virtual 3D space including the virtual object, wherein an image of the virtual object displayed in the virtual 3D space changes according to user requests or preset conditions.

## Description

### BACKGROUND

### 1. Field of the Invention

The present disclosure relates to a smart surveillance and control technology using digital twins.

### 2. Discussion of Related Art

A digital twin is a virtual model designed to reflect a real physical object. The surface form of a digital twin appears to be to make a real object in the real world a twin virtual object in the virtual world and make the movements and actions of the real object a performance role model for the twin virtual object, allowing the real world to be replicated and simulated in the virtual world. Digital twins have been used in part in the manufacturing field since the concept was first introduced in 2002, and have recently been spotlighted in several industries.

In the case of the conventional closed-circuit television (CCTV)-based surveillance and control system, a large number of images captured from a plurality of CCTVs are simultaneously displayed on monitoring screens, and an administrator of the surveillance and control system should watch the plurality of monitoring screens at once to check the current status of a surveillance and control target area. However, in reality, it is difficult for the administrator to identify incidents and accidents, such as traffic accidents and crimes, from a large number of monitoring screens while constantly watching the large number of monitoring screens.

### SUMMARY OF THE INVENTION

The present disclosure is directed to providing a technology capable of improving situational awareness for a surveillance and control target area by an administrator of a surveillance and control system.

The present disclosure is also directed to providing a technology capable of optimizing data throughput and providing detailed information as necessary in the case of a virtual three-dimensional (3D) space and an object to be displayed using a digital twin.

According to an aspect of the present disclosure, there is provided a method for a smart surveillance. The method may comprise: receiving input data including image data obtained from a plurality of cameras; detecting object coordinates indicating a location of an object present in a target area from the input data; calculating object mapping coordinates in a virtual three-dimensional (3D) space that correspond to the object coordinates in the target area; placing a virtual object corresponding to the object in the virtual 3D space corresponding to the target area on the basis of the calculated object mapping coordinates; and generating display data for displaying the virtual 3D space including the virtual object. An image of the virtual object displayed in the virtual 3D space may change according to user requests or preset conditions.

The image of the virtual object displayed in the virtual 3D space may include a virtual image of the object that is generated from an object image captured by at least one camera among the plurality of cameras.

The virtual image may be generated to reflect one or more of object characteristics including a color, a shape, a motion, and a size of the object corresponding to the virtual image.

In the case of a user request for detailed information about the virtual object or when the preset conditions are satisfied, an object image of the object corresponding to the virtual object that is obtained by the camera may be provided.

The object image may include a best shot or an event detection shot among images obtained by photographing the object corresponding to the virtual object. The best shot may include an object image with a highest object identification score calculated based on a size of an area occupied by the object and an orientation and sharpness of the object. The event detection shot may include an object image captured upon detecting an event predetermined by a user.

When an image obtained from a first camera among the plurality of cameras has a circular or elliptical frame, first input data transmitted from the first camera may include a format in which an image obtained from the first camera is disposed in a quadrangular frame, the first input data may include one or more of camera coordinate information, object identification information, information about a distance between the detected object and the camera, and a time code as additional information, and the additional information may be disposed in an area between the image obtained from the first camera and the quadrangular frame.

When an image obtained from a second camera among the plurality of cameras has a quadrangular frame, second input data transmitted from the second camera may include a format in which the image obtained from the second camera is disposed in a circular or elliptical frame, the second input data may include one or more of camera coordinate information, object identification information, information about a distance between the detected object and the camera, and a time code as additional information, and the additional information may be disposed in an area between the image obtained from the second camera and the circular or elliptical frame.

Third input data transmitted from a third camera among the plurality of cameras may include image data obtained from the third camera and additional information, the additional information may include one or more of camera coordinate information, object identification information, information about a distance between the detected object and the camera, and a time code, and the additional information may be included in an optional field of a packet header of video streaming data.

The input data transmitted from one or more cameras among the plurality of cameras may include scrambled data and additional information, the scrambled data may be data obtained by scrambling image frames captured by the cameras, and the additional information may include one or more of a camera installation purpose, an original authentication code, and a descrambled code.

According to another aspect of the present disclosure, there is provided a program stored in a recording medium so that a computer performs the smart surveillance and control method.

According to still another aspect of the present disclosure, there is provided a smart surveillance and control device. The smart surveillance and control device includes a memory configured to store input data, and a processor coupled to the memory, wherein the processor is configured to perform operations of: receiving input data including image data obtained from a plurality of cameras; detecting object coordinates indicating a location of an object present in a surveillance and control target area from the input data; calculating object mapping coordinates in a virtual three-dimensional (3D) space that correspond to the object coordinates in the target area; placing a virtual object corresponding to the object in the virtual 3D space corresponding to the target area on the basis of the calculated object mapping coordinates; and generating display data for displaying the virtual 3D space including the virtual object. An image of the virtual object displayed in the virtual 3D space may change according to user requests or preset conditions.

### BRIEF DESCRIPTION OF THE DRAWINGS

The above and other objects, features and advantages of the present disclosure will become more apparent to those of ordinary skill in the art by describing exemplary embodiments thereof in detail with reference to the accompanying drawings, in which:
FIG. 1 is a diagram illustrating a network connection of a smart surveillance and control device and other components according to one embodiment of the present disclosure;
FIG. 2 is a block diagram illustrating a configuration of the smart surveillance and control device according to the present disclosure;
FIG. 3 is a flowchart illustrating a smart surveillance and control method to be performed by the smart surveillance and control device according to the present disclosure;
FIG. 4 is a block diagram illustrating a configuration of a processor of the smart surveillance and control device according to the present disclosure;
FIG. 5 is a diagram showing a screen displayed using virtual three-dimensional (3D) data generated by the smart surveillance and control device according to the present disclosure;
FIG. 6 is a diagram for describing a real image displayed according to a detailed request for an object in the smart surveillance and control device according to the present disclosure;
FIG. 7 is a diagram for describing a best shot according to the present disclosure;
FIG. 8 is a diagram for describing an example of a configuration of a camera according to the present disclosure;
FIG. 9 is a diagram illustrating a first example of data transmitted from the camera according to the present disclosure;
FIG. 10 is a diagram illustrating a second example of the data transmitted from the camera according to the present disclosure;
FIG. 11 is a diagram illustrating a third example of the data transmitted from the camera according to the present disclosure; and
FIG. 12 is a diagram illustrating a fourth example of the data transmitted from the camera according to the present disclosure.

### DETAILED DESCRIPTION OF EXEMPLARY EMBODIMENTS

Specific structural or step-by-step descriptions of embodiments of the present disclosure are merely for describing examples according to the concept of the present disclosure. Therefore, embodiments according to the concept of the present disclosure may be implemented in various forms. Embodiments according to the concept of the present disclosure may be implemented in various forms. The present disclosure should not be construed as limited to the embodiments of the present disclosure.

While the present disclosure is open to various modifications and alternative forms, specific embodiments thereof are shown by way of example in the accompanying drawings and will herein be described in detail. However, it should be understood that there is no intent to limit the present disclosure to the particular forms disclosed, and on the contrary, the present disclosure is to cover all modifications, equivalents, and alternatives falling within the spirit and scope of the present disclosure.

It will be understood that, although the terms "first," "second," etc. may be used herein to describe various components, these components should not be limited by these terms. These terms are used only to distinguish one component from another component. For example, a first component could be termed a second component, and similarly, a second component could be termed a first component without departing from the scope of the present disclosure.

It should be understood that when a first component is referred to as being "connected" or "coupled" to a second component, the first component may be directly connected or coupled to the second component. However, it should be understood that other components may be present among a plurality of components. In contrast, when a component is referred to as being "directly connected" or "directly coupled" to another component, there are no intervening components present. Other words used to describe the relationship between components should be interpreted in a like fashion (i.e., "between" versus "directly between," "adjacent" versus "directly adjacent," and the like).

The terminology used herein is for the purpose of describing particular embodiments only and is not intended to be limiting to the present disclosure. As used herein, the singular forms "a" and "an" are intended to also include the plural forms, unless the context clearly indicates otherwise. It should be further understood that the terms "comprise," "comprising," "include," and/or "including" used herein specify the presence of stated features, integers, steps, operations, components, parts, or combinations thereof, but do not preclude the presence or addition of one or more other features, integers, steps, operations, components, parts, or combinations thereof.

Unless otherwise defined, all terms including technical and scientific terms used herein have the same meaning as commonly understood by one of ordinary skill in the art to which the present disclosure belongs. It should be further understood that terms, such as those defined in commonly used dictionaries, should be interpreted as having a meaning that is consistent with their meaning in the context of the relevant art and are not to be interpreted in an idealized or overly formal sense unless expressly so defined herein.

In describing embodiments, descriptions of technical content that is well known in the technical field to which the present disclosure belongs and that are not directly related to the present disclosure will be omitted. This is to convey the gist of the present disclosure more clearly without obscuring it by omitting unnecessary explanation.

Hereinafter, the present disclosure will be described in detail by describing exemplary embodiments of the present disclosure with reference to the accompanying drawings. Hereinafter, the embodiments of the present disclosure will be described in detail with reference to the accompanying drawings.

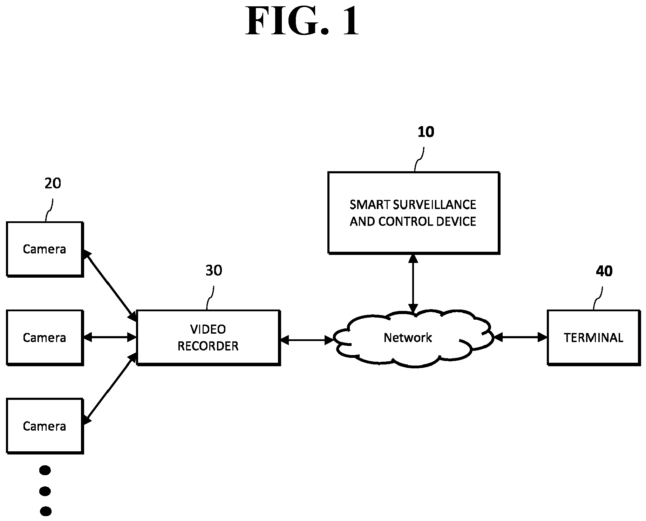

FIG. 1 is a diagram illustrating a network connection of a smart surveillance and control device and other components according to one embodiment of the present disclosure.

Referring to FIG. 1, a smart surveillance and control device 10 may be connected to a plurality of cameras 20, a video recorder 30, and a terminal 40 through a network. The smart surveillance and control device 10 may receive images captured by the plurality of cameras 20 from the video recorder 30, detect coordinates of an object from the received images, calculate object mapping coordinates in a virtual three-dimensional (3D) space, generate spatial data for displaying a virtual 3D space for a digital twin, which includes a virtual object, and provide the generated spatial data to the terminal 40.

The camera 20 may photograph a surveillance and control target area to obtain an image of the surveillance and control target area. The camera 20 may photograph the surveillance and control target area in real time for surveillance or security purposes. The camera 20 may be a pan-tilt-zoom (PTZ) camera capable of panning and tilting and with an adjustable zoom ratio of a lens thereof. The camera 20 may be provided as a plurality of cameras.

The camera 20 may be a low-power camera powered by a battery. The low-power camera normally maintains a sleep mode and periodically wakes up to check whether an event has occurred. The low-power camera enters an active mode when an event occurs, and returned to the sleep mode when no event occurs. In this way, the low-power camera may maintain the active mode only when an event occurs, thereby reducing power consumption.

The cameras 20 may communicate with network devices using various communication methods such as wired and wireless local area networks (LANs), Wi-Fi, ZigBee, Bluetooth, near-field communication, etc. For example, the cameras 20 may communicate with each other according to a low-power wireless communication protocol using radio frequencies in industrial-scientific-medical (ISM) bands.

The video recorder 30 may record images received from the cameras 20 and provide the recorded images to the smart surveillance and control device 10 through the network. The video recorder 30 may be a digital video recorder, a network video recorder, etc., but the present disclosure is not limited thereto.

The network may include a wired network or a wireless network. The wireless network may be a 2^{nd} generation (2G) or 3^{rd} generation (3G) cellular communication system, 3^{rd} Generation Partnership Project (3GPP), a 4^{th} generation (4G) communication system, Long-Term Evolution (LTE), World Interoperability for Microwave Access (WiMAX), etc.

The smart surveillance and control device 10 may receive images captured by a plurality of cameras 20 from the video recorder 30 through the network, generate a virtual 3D screen for a digital twin on the basis of the received images, and transmit the generated virtual 3D screen to the terminal 40.

The terminal 40 may include a terminal used by a surveillance and control administrator or user of the smart surveillance and control device 10. The terminal 40 may access the smart surveillance and control device 10 through the network and display a screen displayed using a virtual object and virtual 3D data provided by the smart surveillance and control device 10.

The smart surveillance and control device 10 may be implemented as a single physical device or implemented by organically combining a plurality of physical devices. The smart surveillance and control device 10 may include the functions of the video recorder 30 and/or the terminal 40.

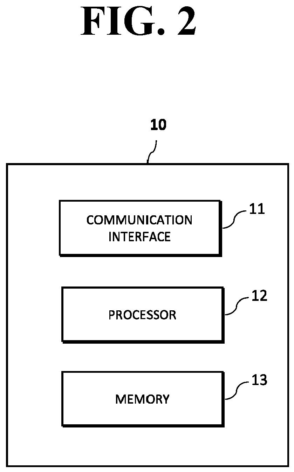

FIG. 2 is a block diagram illustrating a configuration of the smart surveillance and control device according to the present disclosure.

Referring to FIG. 2, the smart surveillance and control device 10 may include a communication interface 11, a processor 12, and a memory 13.

The communication interface 11 may receive images from the plurality of cameras 20. The communication interface 11 may receive user requests from the terminal 40. The communication interface 11 may transmit a generated virtual 3D screen to the terminal 40.

The processor 12 may receive input data including image data obtained from the plurality of cameras 20. The processor 12 may detect object coordinates indicating a location of an object present in a surveillance and control target area from the input data.

The processor 12 may calculate object mapping coordinates in a virtual 3D space corresponding to the object coordinates of the surveillance and control target area. The processor 12 may place a virtual object corresponding to the object in the virtual 3D space corresponding to the surveillance and control target area on the basis of the calculated object mapping coordinates, and generate display data for displaying the virtual 3D space including the virtual obj ect.

The memory 13 may store the input data including the image data obtained from the plurality of cameras 20. The input data may include additional information related to the object.

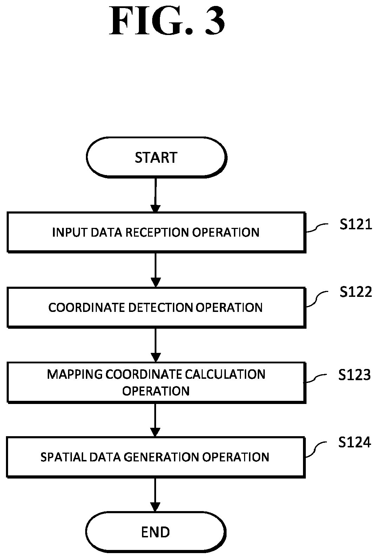

FIG. 3 is a flowchart illustrating a smart surveillance and control method to be performed by the smart surveillance and control device according to the present disclosure.

Referring to FIG. 3, the smart surveillance and control method may include an input data reception operation S121, a coordinate detection operation S122, a mapping coordinate calculation operation S123, and a spatial data generation operation S124.

In the input data reception operation S121, input data including image data obtained from a plurality of cameras 20 may be received. The plurality of cameras 20 may photograph objects and backgrounds and transmit the captured image data. The smart surveillance and control device 10 may receive the input data including the image data.

In one embodiment, the smart surveillance and control device 10 may extract an object from the image data included in the input data and obtain object information. The smart surveillance and control device 10 may detect the object from an image frame and perform segmentation processing to separate the object from the background. Object characteristic information, object identification information, etc. may be extracted from an image of the object separated from the background.

Further, in another embodiment, the smart surveillance and control device 10 may receive additional information related to the object together with the image data from the camera 20 and obtain detailed information about the object using the additional information related to the object. When an artificial neural network semiconductor is mounted in the camera 20, object detection and object classification may be performed using the artificial neural network semiconductor. The camera 20 may transmit information about the detected object together with the image data as the additional information.

In the coordinate detection operation S122, object coordinates indicating the location of an object present in a surveillance and control target area may be detected from the input data. The smart surveillance and control device 10 may detect coordinates of the object (a person, an animal, a car, a moving object, etc.) detected from the image within the surveillance and control target area on the basis of depth information. The location of the camera 20 in the surveillance and control target area is already known, the orientation of the camera 20 is also already known information, and using the depth information, the real coordinates of the object in the image may be detected.

As a method of obtaining depth information, various already known methods may be used. For example, in the case of a PTZ camera, the same object may be photographed at different heights or angles and then the real coordinates of the object may be obtained through triangulation. Further, a mark board of an already known size may be located in a photographing area photographed by the camera, and the size and coordinates of the object may be obtained from the sizes of pixels occupied by the object photographed by the camera and the size of the mark board. In addition to the methods exemplified above, various existing methods for detecting the location of an object may be used.

In the mapping coordinate calculation operation S123, object mapping coordinates in a virtual 3D space that correspond to the object coordinates in the surveillance and control target area may be calculated. There is no change in the background area (buildings, roads, mountains, rivers, etc.) other than the object in the surveillance and control target area that is photographed by the camera 20, and virtual 3D spatial data corresponding to the surveillance and control target area may be generated using existing map data, building data, terrain data, etc. The smart surveillance and control device 10 may convert the coordinates of the object detected in the coordinate detection operation S122 into corresponding object mapping coordinates in the virtual 3D space.

In the spatial data generation operation S124, a virtual object corresponding to the object may be disposed in a virtual 3D space corresponding to the surveillance and control target area on the basis of the calculated object mapping coordinates, and display data for displaying the virtual 3D space including the virtual object may be generated. The display data may include data that can be displayed on a two-dimensional (2D) or 3D screen by a 3D engine. For example, the 3D engine may include Unity, Unreal, Godot, CryEngine, Marmalade SDK, Amazon Lumberyard, ShiVaEngine, HeroEngine, etc.

The virtual object may include a virtual image of the object that is generated from the object image captured by at least one camera of the plurality of cameras. The virtual image may be generated to reflect one or more of the object characteristics including a color, a shape, a motion, and a size of the object corresponding to the virtual image. The color, the shape, the motion, and the size of the object may be extracted from the data on images captured by the camera 20.

Color information of the object may include information about a color or pattern representing the object in the image. The smart surveillance and control device 10 may obtain the color information by extracting a color or pattern forming an object with the highest proportion in the image or by extracting the average value of the colors forming the obj ect (e.g., an average value of red-green-blue (RGB)).

Further, the smart surveillance and control device 10 may obtain the color information by dividing the object to extract a color or pattern for each divided area or by extracting a color or pattern forming a specific area of the object. For example, when the object is a person, the smart surveillance and control device 10 may obtain the color information by dividing the person into parts such as face, hair, an upper part, and a lower part and extracting a color or pattern for each divided part. Alternatively, when the object is a vehicle and a specific area corresponds to a frame forming the exterior of the vehicle, the smart surveillance and control device 10 may obtain the color information by extracting the color of an exterior frame of the vehicle.

Shape information of the object is the shape of the object projected on the image. The smart surveillance and control device 10 may obtain the shape information by extracting boundary lines between the object and the background in the image. Motion information of the object is information about a posture and motion taken by the object. The smart surveillance and control device 10 may obtain the information about the posture and motion by extracting the locations of specific points such as the face, hands, and feet from the object.

Size information of the object is the size of the object projected on the image. The smart surveillance and control device 10 may calculate horizontal and vertical lengths of a quadrangle in contact with the outermost lines of the object and obtain the calculated horizontal and vertical lengths as the size information. The horizontal and vertical lengths of the quadrangle may be measured in units of length or the number of pixels.

Additionally, identification information of the object may be reflected in generating a virtual image of the virtual object. The identification information of the object may be information about the type of object, such as a person, an animal, a vehicle, etc. Further, the identification information of the object may include facial landmark data.

In the case of a user request for detailed information about the virtual object or when preset conditions are satisfied, a real object image of the object corresponding to the virtual object that is obtained by the camera may be provided. The object image may include a best shot or an event detection shot among images obtained by photographing the object corresponding to the virtual object.

For example, in the case of a manipulation such as a user's click on the virtual image of the virtual object on a displayed digital twin 3D screen, a captured real image (best shot or event detection shot) of the virtual object may be provided.

Further, when the user presets specific detection event conditions and the set detection event conditions are satisfied, the image of the virtual object displayed as a virtual image (avatar) on the digital twin 3D screen may be automatically changed and displayed as a captured real image of the corresponding object. The best shot may include an object image with the highest object identification score calculated based on a size of an area occupied by the object and an orientation and sharpness of the object. For example, when the number of pixels occupied by the object image is increased among the data on images captured by the camera 20, the orientation of the object faces the front of the camera, or the object image is clearer, the object identification score indicating the degree to which the object may be identified may be increased. The smart surveillance and control device 10 may provide the object image with the highest object identification score as the best shot of the corresponding object.

The event detection shot may include the object image captured upon detecting an event predetermined by the user. For example, it is assumed that an event for detecting a vehicle traveling on a crosswalk is preset from a crosswalk walk signal (green signal). When the vehicle traveling on the crosswalk is detected in a pedestrian signal, the corresponding vehicle is photographed by the camera 20, and an event detection image may be included in the input data transmitted to the smart surveillance and control device 10. When the user selects a corresponding object in the smart surveillance and control device 10 or the preset event condition is achieved, the event detection shot captured for the corresponding object may be provided.

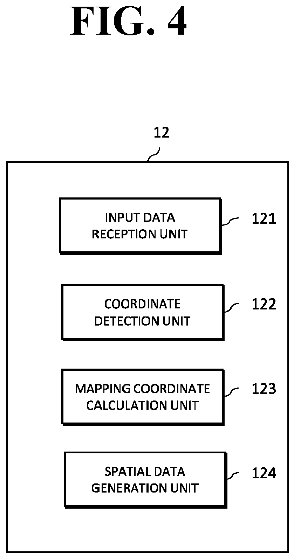

FIG. 4 is a block diagram illustrating a configuration of a processor of the smart surveillance and control device according to the present disclosure.

Referring to FIG. 4, the processor 12 may include an input data reception unit 121, a coordinate detection unit 122, a mapping coordinate calculation unit 123, and a spatial data generation unit 124.

The input data reception unit 121 may receive input data including image data obtained from the plurality of cameras 20.

The coordinate detection unit 122 may detect object coordinates indicating a location of an object present in a surveillance and control target area from the input data.

The mapping coordinate calculation unit 123 may calculate object mapping coordinates in a virtual 3D space corresponding to the object coordinates of the surveillance and control target area.

The spatial data generation unit 124 may place a virtual object corresponding to the object in the virtual 3D space corresponding to the surveillance and control target area on the basis of the calculated object mapping coordinates, and generate display data for displaying the virtual 3D space including the virtual object.

The input data reception unit 121, the coordinate detection unit 122, the mapping coordinate calculation unit 123, and the spatial data generation unit 124 are as described above with reference to the input data reception operation S121, the coordinate detection operation S122, the mapping coordinate calculation operation S123, and the spatial data generation operation S124.

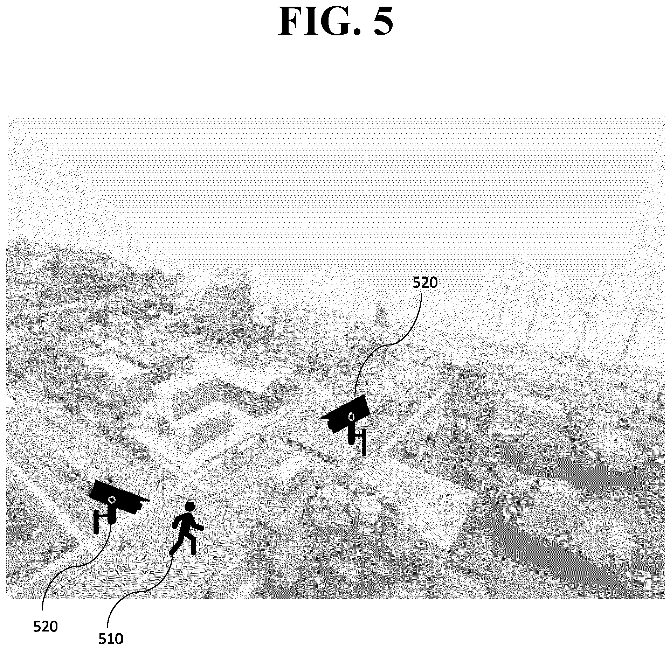

FIG. 5 is a diagram showing a screen displayed using virtual three-dimensional (3D) data generated by the smart surveillance and control device according to the present disclosure.

The smart surveillance and control device 10 may generate virtual 3D data and display a 2D screen or a 3D screen using the generated virtual 3D data. FIG. 5 shows an example of a screen on which an object limited to a person is displayed. The present disclosure is not limited to such an example, and may also be provided to display people, vehicles, animals, objects, etc. as objects within the technical scope of the present disclosure.

Referring to FIG. 5, the smart surveillance and control device 10 may generate data on a virtual 3D space, which is a space in which buildings, roads, mountains, the sea, and other terrain within a surveillance and control target area are virtually implemented. The smart surveillance and control device 10 may map the coordinates of the objects photographed by cameras 520 to the virtual 3D space and display a virtual image of an object 510 on object mapping coordinates.

The smart surveillance and control device 10 may display the virtual 3D space as a bird's-eye view. The bird's-eye view may include a single view of the entire surveillance and control area in which images captured by a plurality of cameras 520 are synthesized. An administrator may use the bird's-eye view provided by the smart surveillance and control device 10 to easily check the movement and status of the object from the bird's-eye view within the surveillance and control area without monitoring individual screens of the plurality of cameras 520.

The smart surveillance and control device 10 may place an image of a virtual object corresponding to the object obtained from the image data obtained from the cameras on the object mapping coordinates in the virtual 3D space, and display the image of the virtual object so that the image of the virtual object moves according to the movement trajectory of the object when the object moves. As shown in FIG. 5, the virtual object may be displayed as a virtual image (avatar) that allows the type and characteristics of the object to be known.

Further, the smart surveillance and control device 10 may change the image of the virtual object according to the user's requests or preset conditions. For example, when the user requests detailed information about a moving person by clicking on the moving person (red avatar) shown in FIG. 5, the smart surveillance and control device 10 may display an image (best shot or event detection shot) of an object (red avatar) for which detailed information has been requested that is captured by a real camera, as an image of the virtual object. Further, when a person jaywalking on the roadway is preset as a detection event condition, for example, when a person jaywalking on the roadway is detected as shown in FIG. 5, a captured real image (event detection shot) of the person jaywalking on the roadway may be displayed as an image of a virtual object or may be displayed together with an avatar image of the virtual object.

In order for the smart surveillance and control device 10 to generate the virtual 3D data of the object from the images of the object obtained from the cameras, a significant amount of data should be processed, and data processing also takes a considerable amount of time. Since the smart surveillance and control device 10 does not display a 3D image of the virtual object, but displays the object using the virtual image (avatar) from which the type and characteristics of the virtual object can be identified, the amount of data and processing time associated with object image processing can be reduced. Further, since the real image (best shot or event detection shot) of the object is displayed as necessary according to the user's requests or preset conditions, the user may check the detailed information about the object of interest through the real image of the object of interest.

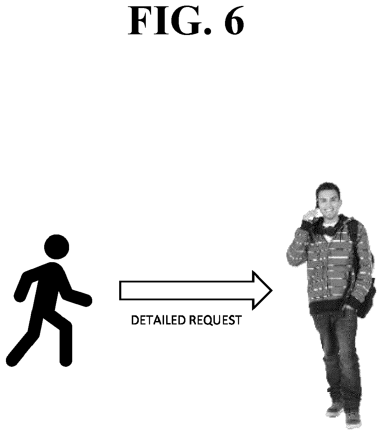

FIG. 6 is a diagram for describing a real image displayed according to a detailed request for an object in the smart surveillance and control device according to the present disclosure.

As shown in FIG. 5, the smart surveillance and control device 10 may display an avatar (virtual image) that reflects a color, a shape, a motion, and a size of the object 510. When the user requests detailed information about an object corresponding to the avatar by a manipulation such as clicking on the avatar, the smart surveillance and control device 10 may provide a real image of the object corresponding to the avatar. The real image of the object may include an object image extracted from the images captured by the cameras 20.

The real image of the object may include a best shot of the object or an event shot of the object. The best shot may be an image with the highest object identification score, and the event shot may be an image captured when a predetermined event is detected.

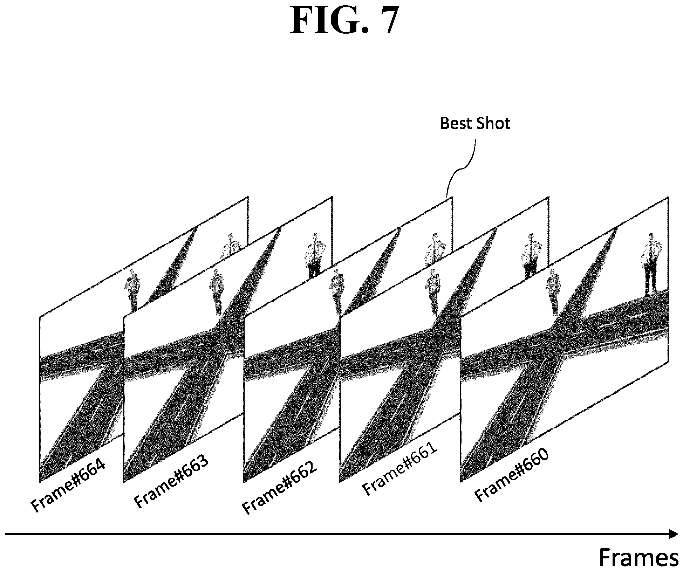

FIG. 7 is a diagram for describing a best shot according to the present disclosure.

An image captured by the camera 20 may include a plurality of frames. The plurality of frames may include an object image captured at each viewpoint. A best shot is an image from which an object can be best identified. An object identification score may indicate the degree to which the object may be identified, and when the number of pixels occupied by the object image is increased, the orientation of the object faces the front of the camera, or the object image is clearer, the object identification score may be increased. The best shot may be included in input data transmitted from the camera 20, and may be extracted by the smart surveillance and control device 10 from image data transmitted from the camera 20.

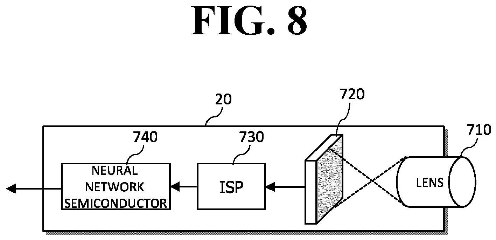

FIG. 8 is a diagram for describing an example of a configuration of the camera according to the present disclosure.

Referring to FIG. 8, the camera 20 may include a lens 710, an image sensor 720, an image signal processor (ISP) 730, and an artificial neural network semiconductor 740. The artificial neural network semiconductor 740 may have object detection and object classification functions.

When object and background images are captured by the camera 20, image data of the object and background may be obtained by the image sensor 720 through the lens 710. The obtained image data may be processed through the ISP 730, and the processed image data may be input to the artificial neural network semiconductor 740. The artificial neural network semiconductor 740 may detect an object from the input image data and generate information related to the object as additional information. The camera 20 may allow the additional information together with the image data to be included in the input data, and transmit the input data to the smart surveillance and control device 10.

The additional information related to the object may be generated using the artificial neural network semiconductor 740 included in the camera 20, and when the generated additional information is transmitted together with the image data to the smart surveillance and control device 10, the smart surveillance and control device 10 may obtain detailed information related to the object from the additional information together with the image data. Further, the additional information transmitted together with the image data may include not only information related to the object, but also information related to closed-circuit television (CCTV) cameras, time information, an authentic authentication code, and the like.

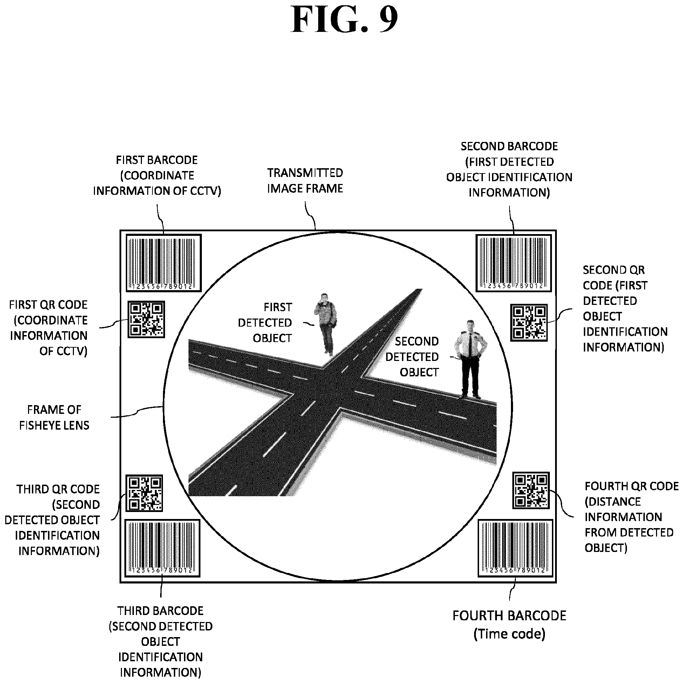

FIG. 9 is a diagram illustrating a first example of data transmitted from the camera according to the present disclosure.

When the camera 20 is a fisheye camera, an image frame captured by the camera 20 may be generated in a circular or elliptical shape. Referring to FIG. 9, the camera 20 may transmit data with additional information inserted, into a quadrangular frame including a circular or elliptical image frame. The additional information may be disposed in areas between the circular or elliptical image frame and the quadrangular frame.

In the example of FIG. 9, camera coordinate information, object identification information, information about a distance between the detected object and the camera, and a time code may be included in the additional information. Each piece of additional information may be inserted into the image frame using an identification code (e.g., a barcode, a quick-response (QR) code, etc.).

The camera coordinate information may be information indicating the coordinates where the corresponding camera is located. The obj ect identification information may include object characteristic information including a color, a shape, a motion, and a size of the object, and identification information (a vehicle number, employee identification (ID) information, student ID information, etc.) for specifying the object.

The information about the distance between the detected object and the camera is information indicating a distance between each detected object (first detected object or second detected object) and the camera. The time code is a unique code assigned to each image frame.

The camera 20 may transmit not only the image data but also the additional information, and the smart surveillance and control device 10 may place the object in a virtual 3D space for a digital twin using the image data and the additional information that are generated by the camera 20, and display a virtual object representing the characteristics of the object.

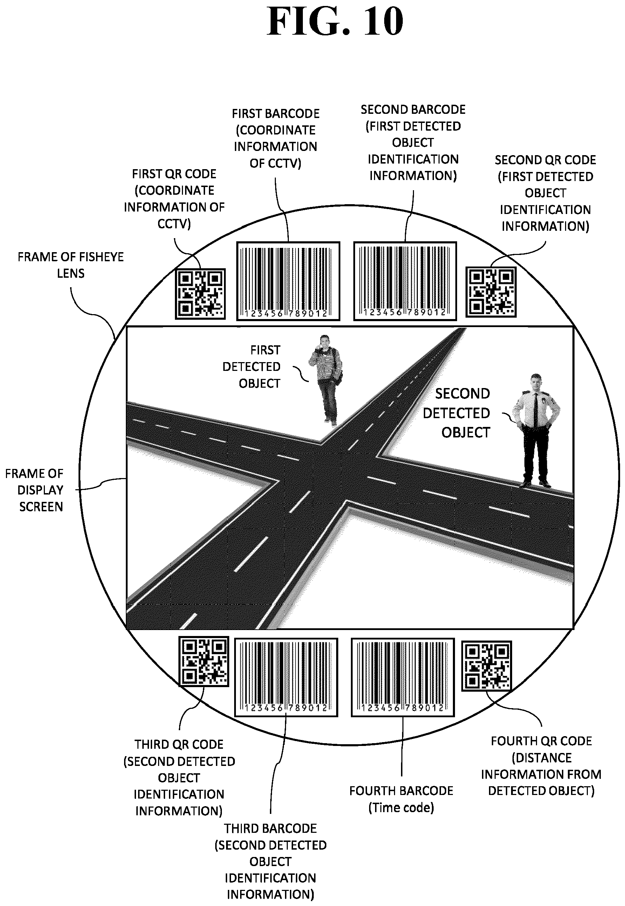

FIG. 10 is a diagram illustrating a second example of the data transmitted from the camera according to the present disclosure.

When the camera 20 is a general camera rather than a fisheye camera, an image frame captured by the camera 20 may be generated in a quadrangular shape. Referring to FIG. 10, the camera 20 may transmit data with additional information inserted, into a circular or elliptical frame including a quadrangular image frame. The additional information may be disposed in areas between the circular or elliptical frame and the quadrangular frame.

The additional information such as camera coordinate information, object identification information, information about a distance between the detected object and the camera, and a time code is as described above with reference to FIG. 9.

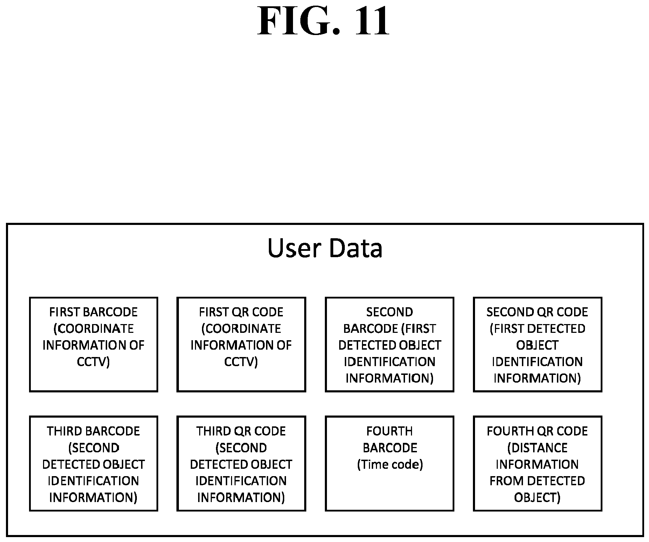

FIG. 11 is a diagram illustrating a third example of the data transmitted from the camera according to the present disclosure.

Although the additional information is inserted into the image frame in the examples of FIGS. 9 and 10, the additional information may be inserted into the syntax of user data in video streaming and transmitted in the third example. As illustrated in FIG. 11, the user data in the video streaming may include additional information.

The additional information included in the user data of FIG. 11 is as described above with reference to the additional information of FIG. 9.

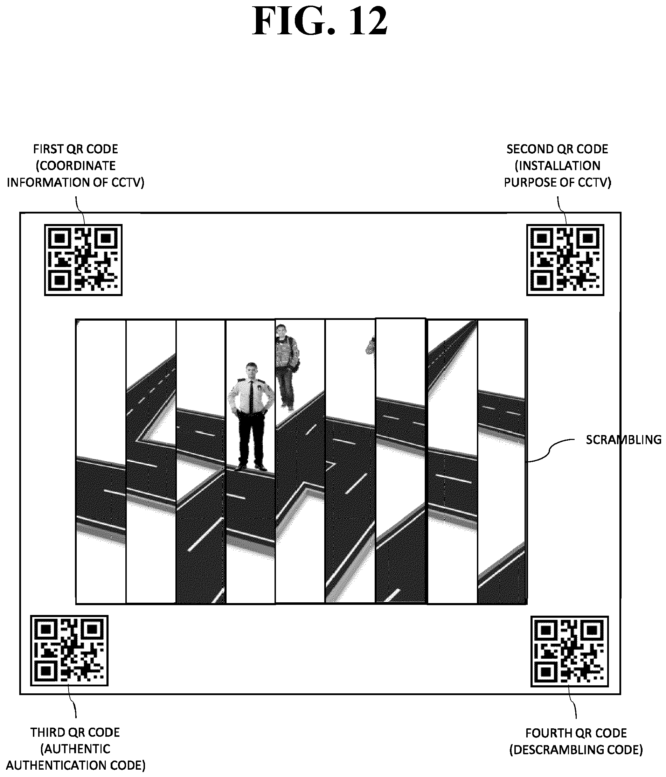

FIG. 12 is a diagram illustrating a fourth example of the data transmitted from the camera according to the present disclosure.

Referring to FIG. 12, the camera 20 may transmit scrambled data obtained by scrambling an image frame and additional information.

When the image frame is transmitted without change, there is a high possibility that privacy issues will occur when the image frame is leaked. When the image frame is modified and transmitted, playback is not possible on a device that is not certified when the image data is transmitted, and thus the above problem may be prevented.

The camera 20 may transmit the scrambled image frame and the additional information. Various known scrambling methods for H.264 or Advanced Video Coding (AVC) may be used for scrambling the image frame.

The camera 20 may allow camera coordinate information, a camera installation purpose, an authentic authentication code, and a descrambled code as the additional information to be included in the image frame, and transmit the camera coordinate information, the camera installation purpose, the authentic authentication code, and the descrambling code. For example, when the captured image is a quad high-definition (QHD) screen of 2560x 1440 pixels, the transmitted image frame may consist of a 4K screen of 3840x2160 pixels with the additional information inserted.

The image authentication code of the additional information may include a code (watermark) for authenticating whether the image transmitted by the camera 20 is authentic. The descrambling code may be a code needed to restore the scrambled image, and the scrambled image may be restored to the original image using the descrambling code in equipment that receives and plays the transmitted data.

According to the embodiments of the present disclosure, it is possible to improve situational awareness for a surveillance and control target area by an administrator of a surveillance and control system.

Further, according to the embodiments of the present disclosure, it is possible to optimize data throughput and improve detailed information as necessary in the case of a virtual 3D space and an object to be displayed using a digital twin.

Embodiments of the present disclosure disclosed in this specification and drawings are only examples to aid understanding of the technical content of the present disclosure and the present disclosure is not limited thereto. It is clear to those skilled in the art that various modifications based on the technological scope of the present disclosure in addition to the embodiments disclosed herein can be made.

## Claims

1. A method for a smart surveillance, comprising:
receiving input data including image data obtained from a plurality of cameras (20, 520);
detecting object (510) coordinates indicating a location of an object (510) present in a target area from the input data;
calculating object (510) mapping coordinates in a virtual three-dimensional (3D) space that correspond to the object (510) coordinates in the target area;
placing a virtual object (510) corresponding to the object (510) in the virtual 3D space corresponding to the target area on the basis of the calculated object (510) mapping coordinates; and
generating display data for displaying the virtual 3D space including the virtual object (510),
wherein an image of the virtual object (510) displayed in the virtual 3D space changes according to user requests or preset conditions.

2. The method of claim 1, wherein the image of the virtual object (510) displayed in the virtual 3D space includes a virtual image of the object (510) that is generated from an object (510) image captured by at least one camera (20, 520) among the plurality of cameras (20, 520).

3. The method of claim 2, wherein the virtual image is generated to reflect one or more of obj ect (510) characteristics including a color, a shape, a motion, and a size of the object (510) corresponding to the virtual image.

4. The method of any one of claims 1 to 3, wherein, in the case of a user request for detailed information about the virtual object (510) or when the preset conditions are satisfied, an object (510) image of the object (510) corresponding to the virtual object (510) that is obtained by the camera (20, 520) is provided.

5. The method of claim 4, wherein the object (510) image includes a best shot or an event detection shot among images obtained by photographing the object (510) corresponding to the virtual object (510).

6. The method of claim 5, wherein the best shot includes an object (510) image with a highest object (510) identification score calculated based on a size of an area occupied by the object (510) and an orientation and sharpness of the object (510).

7. The method of claim 5 or 6, wherein the event detection shot includes an object (510) image captured upon detecting an event predetermined by a user.

8. The method of any one of the previous claims, wherein, when an image obtained from a first camera (20, 520) among the plurality of cameras (20, 520) has a circular or elliptical frame, first input data transmitted from the first camera (20, 520) includes a format in which an image obtained from the first camera (20, 520) is disposed in a quadrangular frame,
the first input data includes one or more of camera (20, 520) coordinate information, object (510) identification information, information about a distance between the detected object (510) and the camera (20, 520), and a time code as additional information, and
the additional information is disposed in an area between the image obtained from the first camera (20, 520) and the quadrangular frame.

9. The method of any one of the previous claims, wherein, when an image obtained from a second camera (20, 520) among the plurality of cameras (20, 520) has a quadrangular frame, second input data transmitted from the second camera (20, 520) includes a format in which the image obtained from the second camera (20, 520) is disposed in a circular or elliptical frame,
the second input data includes one or more of camera (20, 520) coordinate information, object (510) identification information, information about a distance between the detected object (510) and the camera (20, 520), and a time code as additional information, and
the additional information is disposed in an area between the image obtained from the second camera (20, 520) and the circular or elliptical frame.

10. The method of any one of the previous claims, wherein third input data transmitted from a third camera (20, 520) among the plurality of cameras (20, 520) includes image data obtained from the third camera (20, 520) and additional information,
the additional information includes one or more of camera (20, 520) coordinate information, object (510) identification information, information about a distance between the detected object (510) and the camera (20, 520), and a time code, and
the additional information is included in an optional field of a packet header of video streaming data.

11. The method of any one of the previous claims, wherein the input data transmitted from one or more cameras (20, 520) among the plurality of cameras (20, 520) includes scrambled data and additional information,
the scrambled data is data obtained by scrambling image frames captured by the cameras (20, 520), and
the additional information includes one or more of a camera (20, 520) installation purpose, an original authentication code, and a descrambling code.

12. A program stored in a recording medium so that a computer performs the method according to any one claim of claims 1 to 11.

13. A smart surveillance and control device (10) comprising:
a memory (13) configured to store input data; and
a processor (12) coupled to the memory (13),
wherein the processor (12) is configured to perform operations including:
receiving input data including image data obtained from a plurality of cameras (20, 520);
detecting object (510) coordinates indicating a location of an object (510) present in a surveillance and control target area from the input data;
calculating object (510) mapping coordinates in a virtual three-dimensional (3D) space that correspond to the object (510) coordinates in the target area;
placing a virtual object (510) corresponding to the object (510) in the virtual 3D space corresponding to the target area on the basis of the calculated object (510) mapping coordinates; and
generating display data for displaying the virtual 3D space including the virtual object (510), and
wherein an image of the virtual object (510) displayed in the virtual 3D space changes according to user requests or preset conditions.
